Europäisches Patentamt

European Patent Office

Office européen des brevets

(19)

(11) Veröffentlichungsnummer: **0 149 098**
**B1**

(12) **EUROPÄISCHE PATENTSCHRIFT**

(45) Veröffentlichungstag der Patentschrift:
01.03.89

(21) Anmeldenummer: **84114718.4**

(22) Anmeldetag: **05.12.84**

(51) Int. Cl.⁴: **C 08 F 214/06,** C 08 J 3/12,
C 04 B 26/04 // (C08F214/06,
210:02)

(54) Verfahren zur Herstellung eines redispergierbaren Dispersionspulvers und seine Anwendung.

(30) Priorität: **07.12.83 DE 3344242**

(43) Veröffentlichungstag der Anmeldung:
**24.07.85 Patentblatt 85/30**

(45) Bekanntmachung des Hinweises auf die Patenterteilung:
**01.03.89 Patentblatt 89/9**

(84) Benannte Vertragsstaaten:
AT BE CH DE FR GB IT LI NL SE

(56) Entgegenhaltungen:
EP-A- 0 076 511
US-A- 3 784 648

PATENTS ABSTRACTS OF JAPAN, Band 7, Nr. 167
(C-177)[1312] 22. Juli 1983; & JP - A - 58 74 724
(SUMITOMO KAGAKU KOGYO K.K.) 06-05-1983

Die Akte enthält technische Angaben, die nach dem
Eingang der Anmeldung eingereicht wurden und die
nicht in dieser Patentschrift enthalten sind.

(73) Patentinhaber: **WACKER-CHEMIE GMBH,**
**Prinzregentenstrasse 22, D-8000 München 22 (DE)**

(72) Erfinder: **Schulze, Joachim, Dr. Dipl.-Chem., R.**
**Dieselstrasse 2, D-8263 Burghausen (DE)**
Erfinder: **Adler, Klaus, Dr. Dipl.-Chem., Lindenweg 13,**
**D-8263 Burghausen (DE)**
Erfinder: **Selig, Manfred, Dr. Dipl.-Chem.,**
**Regerstrasse 85, D-8263 Burghausen (DE)**
Erfinder: **Ball, Peter, Dr. Dipl.-Chem., Kettelerstrasse 11,**
**D-8261 Emmerting (DE)**
Erfinder: **Marquardt, Klaus, Dr. Dipl.-Chem.,**
**Lindacherstrasse 77, D-8263 Burghausen (DE)**
Erfinder: **Killermann, Otmar, Atzing 18,**
**D-8347 Kirchdorf/Inn (DE)**
Erfinder: **Hannebaum, Manfred,**
**Immanuel-Kant-Strasse 49a, D-8263 Burghausen (DE)**

## Beschreibung

Die Erfindung betrifft ein Verfahren zur Herstellung eines gut redispergierbaren rieselfähigen Dispersionspulvers aus einem Vinylchlorid-Ethylen-Copolymerisat (VCE), das durch Polymerisation von Vinylchlorid (VC), Ethylen (E) und weiterer damit copolymerisierbaren ethylenisch ungesättigten Monomeren bei Ethylendrücken von mindestens 10 bar hergestellt worden ist, bei dem eine wäßrige Dispersion des VCE-Copolymerisats, die außerdem Schutzkolloid enthält, gegebenenfalls unter Zugabe von 0–40 Gew.%, bezogen auf das VCE-Polymerisat, einer oder mehrerer wasserlöslicher Substanzen, mit einer Tg $\geqslant$ 60°C, von 0 bis 1 Gew.%, bezogen auf das VCE-Polymerisat, eines handelsüblichen Antischaummittels, von 0–30 Gew.%, bezogen auf das Gesamtgewicht polymerer Bestandteile, an sich bekanntem feinteiligem Antiblockmittel, von Antiblockmittel und/oder weiterer Zusätzen, z.B. Polyvinylalkohol, sprüh- oder gefriergetrocknet wird. Weiterhin betrifft die Erfindung die Verwendung der so hergestellten Dispersionspulver im Bausektor und bei der Herstellung von Anstrichs- und Beschichtungsmitteln, Leimen und Klebstoffen.

Redispergierbare Pulver sind an sich bekannt und werden seit vielen Jahren gerade im Bausektor mit Erfolg eingesetzt. Sie verbessern das Eigenschaftsbild von hydraulisch abbindenden Systemen, wie z.B. die Abriebsbeständigkeit, die Biegezugfestigkeit oder die Haftung.

An solche Dispersionspulver werden üblicherweise folgende Anforderungen gestellt:

Sie sollen gut rieselfähig sein, eine hohe Lagerstabilität und gute Redispergierbarkeit besitzen. Die mit Wasser aus den Pulvern erhaltenen Redispersionen sollen eine minimale Filmbildungstemperatur (MFT) von ca. −10°C–ca. 10°C, z.B. ca. 0°C aufweisen und etwa die gleiche mittlere Teilchengröße besitzen wie die Ausgangsdispersionen. Die Redispersionen sollen auch über einen längeren Zeitraum stabil sein, d.h. sie sollen keine Neigung zum Absetzen aufweisen.

Die am Markt befindlichen weichen Redispersionspulver, d.h. solche mit niedrigen Glasübergangstemperaturen (Phasenumwandlungspunkt zweiter Ordnung; $T_g$) um etwa 0°C, haben jedoch die Eigenschaft, daß sich bei Zugabe der Pulver zum hydraulisch abbindenden System die Druckfestigkeit stark erniedrigt und daß die mechanischen Eigenschaften bei Naßlagerung stark verschlechtert werden. Bei Einsatzgebieten, wie z.B. in Estrichen oder allgemein in Bauteilen, die hoher Druckbelastung und/oder erhöhter Feuchtigkeit ausgesetzt sind, kann dieses Eigenschaftsbild natürlich von Nachteil sein. Ein weiterer Nachteil bisheriger Redispersionspulver liegt in ihrem Brandvorhalten. Gerade beim Einsatz höherer Pulvermengen ist dies nachteilig, wie der übliche Brandschachttest zeigt (DIN 4102).

Ein weiteres Problem bei Dispersionspulvern auf der Basis von Vinylester-Polymerisaten stellt die Verseifungsanfälligkeit dieser Polymeren dar. So werden z.B. die Pulver, die gemäß der DE-A-

2 214 410 (& US-A-3 883 489) und der DE-A-2 614 261 (& GB-A-1 569 637) hergestellt worden sind und über 40 bzw. 45 Gew.-% Vinylacetateinheiten aufweisen sollen, dort als auf dem Bausektor auch lediglich für den Einsatz als Bindemittel für Kunststoffputze geeignet beschrieben.

Es wurde nunmehr ein Verfahren zur Herstellung neuer redispergierbarer Dispersionspulver gefunden, die sich aufgrund ihrer besseren Eigenschaften besonders gut auf dem Bausektor, insbesondere auch im Zusammenhang mit hydraulisch abbindenden Massen, eignen. So liefert das erfindungsgemäße Verfahren Produkte, mit denen überraschenderweise die Nachteile von zu niedriger Druckfestigkeit (im Vergleich mit Pulvern, deren Polymere vergleichbare MFT besitzen), sowie der bei Naßlagerung starke Abfall der mechanischen Werte in hydraulisch abbindenden Systemen vermieden werden können, ohne im grundsätzlichen Eigenschaftsbild für Redispersionspulver wie gute Redispergierbarkeit, Erhöhung der Abriebsbeständigkeit, Haft-Zug- und Biegezugfestigkeit in hydraulisch abbindenden Systemen hinnehmen zu müssen. Gleichzeitig zeigen die erfindungsgemäß hergestellten Dispersionspulver erhöhte Verseifungsbeständigkeit, geringere Brennbarkeit und weisen aufgrund geringerer Rohstoffkosten auch wirtschaftliche Vorteile auf.

Das erfindungsgemäße Verfahren ist dadurch gekennzeichnet, daß das VCE-Copolymerisat in Abwesenheit von Emulgator durch radikalische Emulsionspolymerisation von

a) 1 bis 50 Gew.-% Ethylen und

b) 99 bis 50 Gew.-% mindestens eines ethylenisch ungesättigten Comonomeren bei einem Ethylendruck von 10 bis 150 bar hergestellt worden ist, wobei sich die Comonomerphase zusammensetzte aus

$b_1$) 60 bis 100 Gew.-% Vinylchlorid,

$b_2$) 0 bis 40 Gew.-% monoethylenisch ungesättigter, öllöslicher Monomeren aus der Gruppe der ethylenisch ungesättigten Allyl- und Vinylester von nicht ethylenisch ungesättigten Carbonsäuren, Dialkylester von ethylenisch ungesättigten $C_4$- bis $C_{10}$-Dicarbonsäuren, α-Olefine, sowie Styrol, Vinyltoluol, Vinylether, Vinylketone, Vinylhalogenide, Vinylidenhalogenide, und

$b_3$) 0 bis 5 Gew.-% öllöslicher Monomeren, die mehrfach ethylenisch ungesättigt sind.

Das Vinylchlorid macht mindestens 60 Gew.-%, vorzugsweise mindestens 65 Gew.-%, insbesondere mindestens 75 Gew.-% der Komponente b aus.

Als Beispiele für die Komponente $b_2$, die mit den anderen Monomeren copolymerisierbar sind, sind zu nennen:

ethylenisch ungesättigte Ester wie Allyl- und vorzugsweise Vinylester von nicht ethylenisch ungesättigten, gesättigten geradkettigen, verzweigten oder cyclischen Carbonsäuren, insbesondere von $C_1$ bis $C_{20}$-Alkylcarbonsäuren, z.B. Vinylacetat, Vinylpropionat, Vinylbutyrat, Vinyl-2-ethylhexanoat, Vinyllaurat, Vinylstearat, Vinylester von stark verzweigten Carbonsäuren, die z.B. durch die sogenannte Koch-Synthese aus Olefinen und Kohlenoxid hergestellt werden können (soge-nannte Versatic®-Säurevinylester), wie Dialkyl-ester von $C_1$- bis $C_{18}$-Alkohole mit Malein-, Fumar- und Itakonsäure, sowie Propylen und Butylen, sowie Vinylfluorid und -bromid, sowie z.B. Vinylidenchlorid.

Bevorzugt sind die genannten Ester, insbesondere die Vinylester, die Maleinsäureester, die Fu-marsäureester und die genannten Halogenidderi-vate des Ethylens. Besonders bevorzugt sind die genannten Ester.

Diese monoethylenisch ungesättigten, keine weiteren Reaktionen eingehenden, insbesondere nicht vernetzend wirkenden Monomeren, die einzeln oder als Gemisch eingesetzt sind, stellen höchstens 40 Gew.-%, vorzugsweise höchstens 35, insbesondere von 0 bis 25 Gew.-% der Komponente b dar.

Des weiteren können in der Comonomerkompo-nente b noch öllösliche, wenig wasserlösliche, vorzugsweise wasserunlösliche, Monomere in Mengen von 0 bis 5 Gew.-% enthalten sein, die mehrere ethylenische Doppelbindungen aufweisen.

Beispiele hierfür sind

Vinyl- und Allylester ungesättigter $C_3$- bis $C_8$-Monocarbonsäuren, sowie Divinyl- und -allylester von gesättigten oder ungesättigten $C_4$- bis $C_{10}$-Dicarbonsäuren, Triallylcyanurat und Di- und Po-lyester von $\alpha,\beta$-ungesättigten Carbonsäuren mit polyfunktionellen Alkoholen.

Die VCE-Copolymeren setzen sich vorzugsweise aus den Monomeren der Gruppen a, $b_1$ und gegebenenfalls $b_2$ zusammen. Sie besitzen vor-zugsweise K-Werte (nach DIN 53 725, gemessen in $THF/H_2O$ 95:5) von 20 bis 100, besonders vorzugsweise 30 bis 80, insbesondere 35 bis 70.

Vorzugsweise werden erfindungsgemäß VCE-Dispersionen verwendet, die unter der Berücksichtigung der hier offenbarten Grenzen nach dem Verfahren der EP-A-76 511 oder dem der DE-A-3 312 255 hergestellt worden sind. Die Offenbarung dieser genannten Anmeldungen sollen diesbezüglich auch als Teil der vorliegenden Anmeldung betrachtet werden.

Besonders bevorzugt werden VCE-Polymerisate, die 1 bis 40 Gew.-% Ethyleneinheiten, 40 bis 99 Gew.-% Vinylchlorideinheiten und 0 bis 35 Gew.-% Einheiten der Komponente $b_2$ enthal-ten. Mehr bevorzugt ist eine Zusammensetzung von 3 bis 35 Gew.-% Ethyleneinheiten, 40 bis 97 Gew.-% Vinylchlorideinheiten und 0 bis 30 Gew.-% Einheiten der Komponente $b_2$.

Hierbei machen die Vinylchlorid-Einheiten jeweils mindestens 60 Gew.-% der Einheiten aus Monomeren der Komponente b aus.

Besonders bevorzugt werden als VCE-Polyme-risate Ethylen/Vinylchlorid/Vinylacetat-Copoly-mere, und insbesondere Ethylen/Vinylchlorid-Copolymere verwendet.

Bei der radikalischen Emulsionspolymerisation der VCE-Copolymerisate wird Schutzkolloid eingesetzt. Vorzugsweise wird 1 bis 20 Gew.-% Schutzkolloid, bezogen auf die Komponente b, verwendet.

Es eignen sich alle bei der Emulsionspolymerisation in wäßriger Phase als Schutzkolloid verwendbaren Verbindungen in den üblichen Konzentrationen, sie sind dem Fachmann bekannt, der die am besten geeigneten Verbindungen in wenigen Vorversuchen ermitteln kann. Dazu gehören z.B. durch Hydrolyse (Solvolyse) hergestellte wasserlösliche Vinylalkohol/Vinylacetat-Copolymere mit einem Hydrolysegrad von 70 bis 99,5 Mol-%, vorzugsweise 80 bis 99 Mol-%, insbesondere 86 bis 90 Mol-% und einem bevorzugten viskosimetrisch ermittelten Molekulargewicht von 15 000 bis 100 000. Diese PVAL werden im allgemeinen besonders bevorzugt. Weitere gut geeignete Beispiele sind z.B. Cellulosederivate, insbe-sondere Hydroxyethylcellulosen mit Molekularge-wichten von 50 000 bis 1 000 000 und einem Substitutionsgrad im Bereich von 1,5 bis 3, Vinylpyrrolidon-Polymere (insbesondere Polyvinylpyrrolidon) mit einem Molekulargewicht von 5000 bis 400 000, Stärken und Stärkederivate wie hydroxyalkylierte Stärken, phosphatierte und/oder sulfatierte Stärken, abgebaute Stärken, z.B. Dextrine und Gemische dieser vorzugsweise wasserlöslichen und im allgemeinen handelsüblichen Schutzkolloide.

Die VCE-Dispersionen sollen im allgemeinen Festgehalte von 10 bis 75 Gew.-%, vorzugsweise 30 bis 65 Gew.-% aufweisen. Der optimale Festgehalt richtet sich nach Art und Menge der weiter unten beschriebenen zugesetzten wasserlöslichen Substanzen und wird vorzugsweise einfach anhand viskosimetrischer Messungen im Hinblick auf das verwendete Trockensystem festgestellt. Für die bevorzugte Sprühtrocknung hat sich insbesondere die Viskosität des Gesamtsystems von bis zu 1 Pa.s bewährt. Gegebenenfalls kann die Viskositäť z.B. durch Zusatz von Wasser herabgesetzt werden.

Falls gewünscht und bevorzugt, kann der pH der Dispersion durch Zusatz bekannterer Mittel, wie Alkalibicarbonate, -phosphate, -acetate oder Ammoniak geregelt werden, z.B. auf Werte von 4 bis 7,5.

Die Trocknung der VCE-Dispersion wird in Gegenwart einer oder mehrerer wasserlöslicher Substanzen mit einem Phasenumwandlungspunkt zweiter Ordnung (Glasübergangstemperatur, $T_g$) bei mindestens 60 °C durchgeführt, die in Mengen von 0 bis 40 Gew.-%, vorzugsweise 0–30 Gew.-%, insbesondere 0–20 Gew.-%, bezogen auf das VCE-Polymerisat zugesetzt werden. Die genaue optimale Menge richtet sich nach der Stabilisierung der VCE-Dispersion und nach der $T_g$ des darin enthaltenen VCE-Polymerisats.

Dabei hat es sich besonders bewährt, wenn, um eine gute Redispergierbarkeit zu erreichen, die Summe der Mengen an Schutzkolloid, das bei der Herstellung der VCE-Dispersion verwendet wird, und der Menge an wasserlöslicher Substanz mit einer $T_g \geqslant 60$ °C, die vielfach als Verdüsungshilfe bezeichnet wird, mindestens 5 Gew.-%, besonders bevorzugt 8 Gew.-%, bezogen auf VCE-Polymerisat beträgt. Als Obergrenzen dieser Summe haben sich 50 Gew.-%, bevorzugt 30 Gew.-%, bewährt.

Es ist selbstverständlich möglich, die genannten Obergrenzen auch zu überschreiten, wodurch die Redispergierbarkeit u.U. sogar noch verbessert werden kann, jedoch kann dies nach dem Einsatz für die mechanischen Werte insbesondere nach Naßlagerung von Nachteil sein.

Als Verdüsungshilfe haben sich vor allem polymere wasserlösliche Substanzen bewährt, insbesondere solche mit hohen Polymerisationsgraden. Als Beispiele für solche Substanzen, die vielfach handelsüblich sind und auch bereits für diesen Zweck eingesetzt worden sind, seien genannt:

Vinylalkohol-Copolymere (Polyvinylalkohole), Vinylpyrrolidon-Polymere, Cellulosederivate, Stärkederivate, Ligninsulfonate, wasserlösliche Kondensationsprodukte aus Melamin und Formaldehyd, aus Naphthalinsulfonsäure und Formaldehyd, Polyacrylsäure, Polyacrylamide und deren Gemische.

Bevorzugt weden Polyvinylalkohole mit einer Viskosität von 3 bis 50 mPas, vorzugsweise 3–35 mPas (nach Höppler in 4 gew.-%iger Lösung in Wasser) und mit einem Hydrolysegrad von 60–95 Mol-%, vorzugsweise 70 bis 93 Mol-% und Stärkederivate, bevorzugt Gelbdextrin, und ganz besonders bevorzugt Mischungen von Polyvinylalkohol und Gelbdextrin im Verhältnis von 1:1 bis 30:1, im besonderen 5:1 bis 15:1.

Prinzipiell kann die Verdüsungshilfe in beliebiger Art und Weise mit der VCE-Dispersion zusammengebracht werden. Bevorzugt wird die Verdüsungshilfe jedoch als wäßrige Lösung zugesetzt, wobei z.B. durch die dabei verwendete Wassermenge zugleich die Viskosität der VCE-Dispersion, sofern gewünscht, gesteuert werden kann.

Bei der Herstellung von VCE-Polymerisaten gemäß der EP-A-76 511 werden die dort verwendeten inerten Substanzen vorzugsweise so ausgewählt und vorzugsweise nur in solchen Mengen eingesetzt, daß die Verdüsungshilfe dadurch nicht weich gemacht wird.

Bei der Verdüsung hat sich vielfach ein Gehalt an Antischaummittel (Entschäumer) als vorteilhaft erwiesen, dessen Menge in weitem Bereich variiert werden kann. Gute Ergebnisse erhält man hinsichtlich des Schaumverhaltens mit Mengen von 0 bis 1 Gew.-%, bezogen auf VCE-Polymerisate. Diese Menge kann durch wenige Vorversuche noch optimiert werden, da sie sich auch nach der VCE-Dispersion und der Verdüsungshilfe richtet. Zu große Mengen an Entschäumer sollten vermieden werden, da es sonst zum Ausschwimmen gerade auch bei der Anwendung der erfindungsgemäß hergestellten Redispersionspulver in hydraulisch abbindenden Systemen kommen kann. Geeignete Entschäumer sind marktgängig und brauchen hier nicht mehr eingehend beschrieben zu werden, es seien nur solche auf Silikon- und auf Kohlenwasserstoffbasis erwähnt.

Die VCE-Dispersion wird, gegebenenfalls nach Zugabe der Verdüsungshilfe und des Entschäumers getrocknet, vorzugsweise sprühgetrocknet. Hierbei kann auf die bekannten Vorrichtungen, wie z.B. Versprühen durch Mehrstoffdüsen oder mit der Scheibe in einem ggf. erhitzten Trockengasstrom zurückgegriffen werden.

Zur Erhöhung der Lagerfähigkeit und um z.B. bei Pulvern mit niedriger $T_g$ ein Verbacken und Verblocken zu verhindern und um somit die Redispergierbarkeit zu verbessern, wird das erhaltene Pulver mit 0 bis 30 Gew.-%, bezogen auf das Gesamtgewicht polymerer Bestandteile (VCE-Polymerisat und Verdüsungshilfe), an Antiblock-(Antiback-)mittel versetzt. Dies erfolgt vorzugsweise, solange das Pulver noch fein verteilt ist, z.B. noch im Trockengas suspendiert ist. Insbesondere werden diese Mittel räumlich getrennt aber gleichzeitig mit der Dispersion in die Trocknungsvorrichtung dosiert.

Es können alle für diesen Zweck bisher schon eingesetzten Antiblockmittel auch erfindungsgemäß eingesetzt werden. Hierbei kann nach der Faustregel verfahren werden, je länger die beabsichtigte Lagerdauer sein soll, desto höher sollte auch der Antiblockmittelgehalt gewählt werden. Geeignet als Antiblockmittel sind z.B. fein gemahlene Aluminiumsilikate, Kieselgur, kolloidales Silikagel, pyrogen erzeugtes Siliciumdioxid, gemahlene Tone, Leichtspat, feine Silikate, Talkum, Zemente, Diatomeenerde, Calciumcarbonat u.ä. Besonders geeignet sind Stoffe mit mittleren Teilchengrößen von 0,1 bis 50 μm in Mengen von vorzugsweise 4 bis vorzugsweise 20 Gew.-%, bezogen auf die polymeren Bestandteile des Pulvers. Hierbei genügen bei gröberen Pulvern im allgemeinen auch geringere Mengen.

Auf die vorstehend beschriebene Art und Weise erhält man ein Redispersionspulver, das nicht nur die allgemein üblichen Kriterien für ein gutes Redispersionspulver wie gute Redispergierbarkeit und insbesondere in hydraulisch abbindenden Systemen verminderten Abrieb und verbesserte Haftzug- und Biegezugfestigkeit erfüllt, sondern darüber hinaus überraschenderweise erhöhte Druckfestigkeit (im Vergleich zu Pulvern mit ähnlicher MFT des Polymerisats) und nach Naßlagerung deutlich geringeres Nachlassen der mechanischen Werte wie Biegezug- und Druckfestigkeit, sowie verbesserte Verseifungsbeständigkeit zeigt.

In einzelnen Punkten erreichen zwar bereits bekannte Redispersionspulver die Werte, die mit den erfindungsgemäßen Pulvern erreicht werden, jedoch erreichen die erfindungsgemäß hergestellten Pulver in den verschiedenen Eigenschaften als Kombination ein solch hohes Niveau, das in seiner Ausgewogenheit und Höhe keineswegs vorhersehbar war.

Die erfindungsgemäß hergestellten Redispersionspulver eignen sich für viele Einsatzzwecke, man kann allgemein sagen, sie eignen sich für alle Zwecke, in denen Redispersionspulver eingesetzt werden können.

Besonders interessant ist die beschriebene Kombination der guten Eigenschaften für hydraulisch abbindende Systeme, worin die erfindungsgemäß hergestellten Pulver daher auch besonders bevorzugt eingesetzt werden. Jedoch auch als Bindemittel, z.B. für Kunststoffputze, und als Kleber, z.B. für Fliesen, Dammplatten lassen sich die Pulver im Bausektor vorteilhaft einsetzen. Daneben eignen sie sich jedoch auch besonders gut auf anderen Sektoren als Bindemittel, z.B. in Anstrich- und Beschichtungsmitteln (Farben), Leimen, Klebstoffen u.a. Aufgrund ihres hohen VC-Gehaltes sind die beschriebenen Pulver auch für Kleber, Beschichtungen usw., die schwerer entflammbar sein müssen, besonders vorteilhaft.

Die folgenden Beispiele und Vergleichsversuche dienen der weiteren Erläuterung der Erfindung. Mengen- und %-Angaben beziehen sich, soweit nicht anders angegeben, auf das Gewicht. %-Angaben beziehen sich darüber hinaus jeweils auf die in der Beschreibung und den Ansprüchen angegebene Basis.

Die Druckfestigkeit und die Biegezugfestigkeit wurden nach DIN 1164 (DIN = Deutsche Industrienorm) bestimmt.

Der Petriwert (Petri, Kunststoffe, 53 (1963) 421), der ein Maß für die Verseifungsbeständigkeit ist, wurde wie folgt gemessen.

Genau 10 g 50%ige Redispersion des Pulvers wurden in einen 300 ml-Schliff-Erlenmayer-Kolben gegeben, mit 10 ml Wasser gut verrührt und gegen Mischindikator M mit 0,1 n NaOH neutralisiert. Anschließend wurden 50 ml 0,1 n NaOH zugegeben und unter Rühren und Luftabschluß 48 h bei 60°C gehalten. Die Rücktitration erfolgte mit 0,1 n HCl gegen Mischindikator M oder auf pH 7 mit einem pH-Meter.

Je höher der Verbrauch an HCl, desto besser die Verseifungsbeständigkeit. Daß durch teilverseiften Polyvinylalkohol als Schutzkolloid bzw. Verdüsungshilfe ein Teil der NaOH durch Nachverseifung der darin enthaltenen Polyvinylacetateinheiten verbraucht wird, muß berücksichtigt werden.

Ein Maß für die Redispergierbarkeit stellen die Röhrenabsitzwerte (RAS) dar. Dazu wurden in einem Grindomat (Fa. Retsch) 50 g Pulver in 50 ml Wasser redispergiert, danach auf 0,5% Festgehalt verdünnt und die Absitzhöhe an Feststoff von 100 ml 0,5%-iger Redispersion in Absitzröhren, die in 0,1 ml kalibriert sind, gemessen. Je weniger Feststoff sich nach 1 h bzw. 24 h abgesetzt hat, um so besser redispergiert das Redispersionspulver.

Beispiel I:
Analog der EP 76 511 wurde eine
Ethylen/Vinylchlorid/Vinylacetat-Copolymer-dispersion
hergestellt. Dabei wurde zunächst in einem Tank eine Mischung aus 1700 g Vinylacetat und 6800 g Vinylchlorid angesetzt.

In einen Kessel von 16 l Inhalt wurden 2000 g demineralisiertes Wasser und 3500 g einer 20%igen Lösung eines Polyvinylalkohols der Verseifungszahl 140 und der Viskosität von 5 mPas (4%ige wäßrige Lösung bei 20°C nach Höppler) gegeben. Der pH wurde auf 4,3 eingestellt. Anschließend wurde Vakuum angelegt, das mit Stickstoff gebrochen wurde. Dann wurde wieder evakuiert, der Rührer mit 250 min$^{-1}$ eingefahren und die Vorlage auf 50°C aufgeheizt.

Es wurden 230 g handelsübliches Weichmachergemisch (Lusolvan® (BASF)) und 1700 g der o.g. VC/VAC-Mischung zugegeben und 65 bar Ethylen aufgedrückt. Dieser Ethylendruck wurde bis zum Ende der Reaktion aufrechterhalten.

Durch die Dosierung einer 3%igen Kaliumpersulfat- und einer 1,5%igen Formaldehydsulfoxylatlösung wurde die Reaktion gestartet (80 ml/h). Beginnend mit dem Einsetzen der Reaktion wurden die restlichen 6800 g der VC/VAC-Mischung in 4 Stunden dosiert. Der pH wurde während der gesamten Reaktion auf 4,2 bis 4,5 gehalten.

Nach Dosierende der VC/VAC-Dosierung wurde noch 1 Stunde mit jeweils 90 ml der beiden Initiatorlösungen weiterpolymerisiert.

Nun wurde der pH 7 mit NH$_3$ eingestellt, der Ansatz gekühlt und dann in den Entspannungskessel abgelassen. Dort wurde der Ansatz 60 Minuten unter vollem Vakuum stehen gelassen.

Die Enddispersion hatte einen Festgehalt von 64%, einen K-Wert von 50, eine MFT von 1,5°C und einen T$_g$ von 7,5°C.

Der Siebrückstand betrug 1,8 mg/100 g Dispersion (0,056 mm Sieb), nach 1 h hatten sich 0 ml, nach 24 h 0,02 ml abgesetzt (RAS). Die Dispersion wies eine Viskosität von 17 Pas auf (Brookfield-Viskosimeter, 20 min$^{-1}$ Rührer 5).

Das Harz enthielt 64% VC-, 16% VAC-, und 20% Ethyleneinheiten.

Beispiel II:
Beispiel I wurde wiederholt unter Verwendung von 170 g Dioctyladipat statt des Lusolvans.

Die Dispersion hatte einen Festgehalt von 63,4%, einen Siebrückstand von 4,4 g, eine MFT von 4°C, der Absitzwert nach 24 h betrug 0 ml, die Viskosität 14 480 mPas (analog Beispiel I).

Das Harz enthielt 63,5% VC-, 16% VAC- und 19,5% E-Einheiten.

Verdüsung
Eine Menge der Dispersion wurde gemäß Tabelle I mit 3 g handelsüblichem Entschäumer auf Siliconbasis (Fa. Wacker-Chemie GmbH, München) sowie Wasser und Verdüsungshilfe versetzt. Die Dispersion wurde durch eine Zweistoffdüse versprüht, als Verdüsungskomponente diente auf 5 bar vorgepreßte Luft, die gebildeten Tropfen wurden mit auf 95°C erhitzter Luft im Gleichstrom getrocknet.

Das erhaltene trockene Pulver wurde mit 10% handelsüblichem Antiblockmittel (Gemisch aus Calcium-Magnesium-Carbonat und Magnesiumhydrosilikat) versetzt. Die Pulver waren sehr gut redispergierbar und lagerstabil.

Eigenschaftskennzahlen der redispergierbaren Pulver sind ebenfalls in Tabelle I angegeben.

Tabelle 1

| Beispiel | Menge Dispersion (g) | Menge Wasser (g) | Verdüsungshilfe (als 10%ige wässrige Lösung) | | Petriwert der 50%igen Redispersion | RAS (ml) nach 1 h/24 h |
|---|---|---|---|---|---|---|
| | | | Menge (g) | Viskositäts/ Hydrolysegrad* | | |
| I 1 | 2000 | 2000 | 1100 | PVAL 13/87 | 28,5 | 0,02/0,08 |
| I 2 | 2000 | 3000 | 2200 | PVAL 13/87 | 24,9 | 0,01/0,07 |
| I 3 | 2000 | 2000 | 965 | PVAL 5/94 | 33,1 | 0,02/0,1 |
| I 4 | 2000 | 2000 | 965 | PVAL 5/78 | 26,4 | 0,03/0,15 |
| I 5 | 2000 | 2000 | 965 | PVAL 13/87 | 28,9 | 0,02/0,09 |
| II 1 | 2000 | 1500 | – | – | 36,3 | 0,09/0,3 |
| II 2 | 2000 | 2000 | 510 | PVAL 25/87 | 31,6 | 0,03/0,18 |
| II 3 | 1400 | 1000 | 447 | PVAL 25/87 | 30,6 | 0,02/0,09 |
| | | | 444 | Gelbdextrin | | |

* PVAL = Polyvinylalkohol (Viskosität nach Höppler bei 20°C; Hydrolysegrad ausgedrückt in Mol%),
Gelbdextrin: handelsübliche Type
RAS = Röhrenabsitz

Vergleichsversuche
Die Produkte A–F sind bekannte Handelsprodukte und stellen den Stand der Technik dar.

| Vergleichs- beispiel | Harz | MFT | Petriwert | RAS 1 h/24 h (ml) |
|---|---|---|---|---|
| A | Vinylacetat/Ethylen | 4 | 8,7 | 0,01/0,05 |
| B | Vinylacetat/Ethylen | 4 | 8,9 | 0,01/0,06 |
| C | Vinylacetat/Ethylen | <0 | 20,5 | 0,01/0,04 |
| D | Vinylacetat-VeoVa* | 5 | 16,5 | 0,16/0,36 |
| E | Vinylacetat-VeoVa* | 0 | 27,9 | 0,14/0,30 |
| F | Vinylacetat/Ethylen | 0 | 31,5 | 0,17/0,29 |

* VeoVa = Vinyl-Versatic®-säureester

Vergleichsversuch G

Analog Beispiel IV der DE-A-2 214 410 wurden in einem 16 l Autoklaven mit Temperaturregeleinrichtung und Rührwerk die auf einen pH-Wert von 5,0 eingestellte Lösung aus 3,5 g Natriumlaurylsulfat, 250 g Polyvinylalkohol (PVAL 1: Höppler-Viskosität der 4 gew.-%igen wäßrigen Lösung bei 20°C: ca. 18 mPas und Hydrolysegrad ca. 88 Mol-% = Verseifungszahl 140), 159,5 g PVAL 2 (Höppler-Viskosität ca. 8 mPas, Meßbedingungen s.o.; Hydrolysegrad ca. 88 Mol-% = Verseifungszahl 140), 11,1 g wasserfreies Natriumacetat, 6,25 g Natriumhydrogensulfit und 3300 g Wasser gebracht. Der Reaktor wurde sauerstofffrei gespült, dann wurde der Rührer auf 150 min⁻¹ eingestellt und aus einem Vorratstank wurden 380 g einer Mischung aus Vinylacetat und Vinylchlorid (Gewichtsverhältnis 90:10) dem Ansatz zugegeben. Anschließend wurde der Inhalt des Autoklaven auf 40°C erwärmt und nach Erreichen der Temperatur mit einer Lösung von 3,6 g Ammoniumpersulfat (APS) in 147 g Wasser versetzt. Nun wurde der Kessel auf 60°C erwärmt und währenddessen mit Ethylen bis zu einem Gleichgewichtsdruck von 30 bar beaufschlagt. Beim Erreichen der Innentemperatur von 60°C wurde mit der achtstündigen Dosierung von 3470 g des oben beschriebenen VC/VAC-Monomergemisches und der Lösung von 8,2 g APS in 342 g Wasser begonnen.

Nach beendeter Zudosierung wurde der Ansatz noch mit einer Lösung von 2,7 g APS in 100 g Wasser versetzt und für 90 min auf eine Innentemperatur von 80°C nachgeheizt. Der Ethylendruck wurde bis zu diesem Zeitpunkt auf 30 bar gehalten. Nun wurde die Dispersion auf 20°C abgekühlt, entspannt und mit einer wäßrigen Lösung von 67,5 g PVAL 1 und 43 g PVAL 2 in 643 g Wasser versetzt. Dann wurde 60 min. durch Anlegen von Vakuum entgast.

Die Dispersion hatte einen Festgehalt von 48,6% und das Polymere eine MFT von 7°C. 1500 g dieser Dispersion wurden mit 3 g Silikonentschäumer und 2000 ml Wasser versetzt und entsprechend den Versuchsbedingungen der vorstehenden Beispiele sprühgetrocknet. Dem Pulver wurden 10% Antiblockmittel zugesetzt.

Die 50%ige Redispersion zeigte Röhrenabsitzwerte nach 1 h von 0,2 ml und nach 24 h von 0,46 ml, der Petriwert wurde mit 15,9 gemessen.

Anwendungstechnische Untersuchungen

Da die Zementqualität schwankte, wurde zu jeder Meßreihe eine neue Nullprobe mit untersucht, die als interner Standard gilt.

Besonders der Vergleich der verschiedenen Untersuchungen zeigt, daß die erfindungsgemäß hergestellten Pulver ein wesentlich ausgewogeneres Eigenschaftsbild zeigen, wohingegen die Vergleichsproben, selbst wenn bei einzelnen Untersuchungen gute Ergebnisse erzielt wurden, dann bei anderen Untersuchungen deutliche Schwächen zeigen.

a) Biegezugfestigkeit (N/mm²) von Mörtelprismen nach DIN 1164/67

Die Redispersionspulver wurden in die DIN-Mischung eingearbeitet, wobei ein Kunststoffzementfaktor von 0,1 eingehalten wurde. Aus dieser Masse wurden nach DIN Mörtelprismen hergestellt.

Die erhaltenen Werte zeigten bei unterschiedlichen Lagerungen den technischen Fortschritt bei Einsatz der erfindungsgemäßen Pulver, die Meßergebnisse nach Lagerung in Wasser fallen deutlich geringer ab als bei Pulvern nach dem Stand der Technik. Auch das Vergleichsbeispiel G mit einem Vinylchloridanteil < 40% fällt deutlich ab.

Die Meßergebnisse sind in Tabelle II aufgelistet.

b) Druckfestigkeit (N/mm²) von Mörtelprismen nach DIN 1164/67

Die Redispersionspulver wurden in die DIN-Mischung eingearbeitet, wobei ein Kunststoffzementfaktor von 0,1 eingehalten wurde. Aus dieser Masse wurden nach DIN Mörtelprismen hergestellt.

Die erhaltenen Werte zeigen bei unterschiedlicher Lagerung den technischen Fortschritt bei Einsatz der erfindungsgemäßen Pulver. Es wurden deutlich höhere Druckfestigkeiten erreicht. Die Werte fielen nach Naßlagerung nur geringfügig ab. Auch das Vergleichsbeispiel G mit einem Vinylchloridanteil < 40% konnte das Niveau des erfindungsgemäßen Pulvers nicht erreichen.

Die Ergebnisse sind in Tabelle III niedergelegt.

c) Haftzugfestigkeit (N/mm²)

Die Redispersionspulver wurden in einer typischen Fliesenkleberrezeptur eingearbeitet und mit auf dem Markt befindlichen Redispersionspulvern verglichen.

Rezeptur:
| | | |
|---|---|---|
| 50 | g | Portlandzement PZ 35 F |
| 50 | g | Quarzsand F 34 |
| 0,25 | g | Tylose® MHB 30 000 (Hoechst AG, Hydroxypropylmethylcellulose |
| 2,5 | g | Redispersionspulver |
| 25 | g | Wasser |

Es wurde mit 5 × 5 cm großen Fliesen auf Beton der Güterklasse 300 (DIN 1045) geprüft. Die verklebten Fliesen wurden unterschiedlichen Lagerzyklen unterworfen. Die erfindungsgemäßen

Tabelle II Biegezugfestigkeit (N/mm²)

| Beispiel | 28 Tage Normklima (N/mm²) | 28 Tage Wasser (N/mm²) | relativer Abfall Wasser/NK (%) |
|---|---|---|---|
| Meßreihe 1 ohne | | | |
| Pulver | 5,63 | 4,21 | − 25,3 |
| I 1 | 6,67 | 5,23 | − 21,6 |
| I 2 | 6,03 | 4,83 | − 20 |
| I 3 | 6,93 | 5,21 | − 24,9 |
| I 4 | 6,10 | 4,93 | − 19,2 |
| I 5 | 7,12 | 5,12 | − 26,9 |
| A | 5,97 | 3,63 | − 39,2 |
| D | 6,19 | 3,80 | − 38,7 |
| F | 6,20 | 3,75 | − 39,6 |
| Meßreihe 2 ohne | | | |
| Pulver | 5,96 | 4,60 | − 23 |
| II 1 | 6,35 | 5,50 | − 13,4 |
| II 2 | 6,77 | 5,61 | − 17,2 |
| II 3 | 7,73 | 6,10 | − 21,1 |
| E | 6,70 | 4,30 | − 35,9 |
| G | 6,45 | 4,11 | − 36,3 |

Tabelle III Druckfestigkeiten (N/mm²)

| Beispiel | 28 Tage Normklima (N/mm²) | 28 Tage Wasser (N/mm²) | relativer Abfall Wasser/NK (%) |
|---|---|---|---|
| Meßreihe 1 ohne | | | |
| Pulver | 21,4 | 19,3 | − 10,3 |
| I 1 | 19,3 | 18,7 | − 3 |
| I 2 | 16,2 | 16,5 | + 1,8 |
| I 3 | 20,1 | 19 | − 5,5 |
| I 4 | 17,1 | 14,2 | − 17 |
| I 5 | 20,9 | 19,4 | − 7,2 |
| A | 14,7 | 10,7 | − 27,3 |
| D | 16,9 | 12,7 | − 24,9 |
| F | 17,1 | 12,9 | − 24,6 |
| Meßreihe 2 ohne | | | |
| Pulver | 38,5 | 38,1 | − 1,1 |
| II 1 | 33,25 | 27,3 | − 18,2 |
| II 2 | 32,60 | 28,2 | − 13,5 |
| II 3 | 36,7 | 32,5 | − 11,5 |
| E | 28,3 | 18,2 | − 35,7 |
| G | 30,4 | 22,5 | − 26 |
| B | 25,0 | 16,6 | − 33,4 |

Redispersionspulver zeigen gemäß Tabelle IV deutliche Vorteile sowohl gegenüber auf dem Markt befindlichen Produkten als auch dem Vergleichsprodukt G.

Tabelle IV Haftzugfestigkeit (N/mm²)

| Beispiel | 28 Tage Normklima (N/mm²) | 7 Tage Normklima anschl. 21 Tage Wasser (N/mm²) | relativer Abfall Wasser/ NK (%) |
|---|---|---|---|
| ohne Pulver | 1,01 | 0,66 | −35 |
| I 1 | 1,27 | 1,07 | −16 |
| I 2 | 1,21 | 0,97 | −20,5 |
| I 3 | 1,35 | 1,08 | −20 |
| I 4 | 1,17 | 0,95 | −18,9 |
| I 5 | 1,37 | 1,08 | −22,2 |
| A | 1,43 | 0,93 | −35 |
| C | 1,20 | 0,81 | −32,5 |
| E | 0,93 | 0,66 | −29,1 |
| G | 1,15 | 0,75 | −34,8 |

## Patentansprüche

1. Verfahren zur Herstellung eines rieselfähigen, gut redispergierbaren Dispersionspulvers aus einem Vinylchlorid-Ethylen-Copolymerisat, das durch Polymerisation von Vinylchlorid, Ethylen und weiteren, damit copolymerisierbaren ethylenisch ungesättigten Monomeren bei Ethylendrücken von mindestens 10 bar hergestellt worden ist, bei dem eine wäßrige Dispersion des Vinylchlorid-Ethylen-Copolymerisats, die außerdem Schutzkolloid enthält, gegebenenfalls unter Zugabe von 0–40 Gew.%, bezogen auf das VCE-Polymerisat, einer oder mehrerer wasserlöslicher Substanzen mit einer Tg ≥ 60 °C, von 0 bis 1 Gew.%, bezogen auf das VCE-Polymerisat, eines handelsüblichen Antischaummittels, von 0–30 Gew.%, bezogen auf das Gesamtgewicht polymerer Bestandteile, an sich bekanntem feinteiligem Antiblockmittel, von Antibackmittel und/oder weiteren Zusätzen sprüh- oder gefriergetrocknet wird, dadurch gekennzeichnet, daß das Vinylchlorid-Ethylen-Copolymerisat (VCE) in Abwesenheit von Emulgator durch radikalische Emulsionspolymerisation von

a) 1 bis 50 Gew.-% Ethylen und

b) 99 bis 50 Gew.-% mindestens eines ethylenisch ungesättigten Comonomeren bei einem Ethylendruck von 10 bis 150 bar hergestellt wird, wobei sich die Comonomerphase zusammensetzt aus

b₁) 60 bis 100 Gew.-% Vinylchlorid,

b₂) 0 bis 40 Gew.-% monoethylenisch ungesättigter, öllöslicher Monomeren, aus der Gruppe der ethylenisch ungesättigten Allyl- und Vinylester von nicht ethylenisch ungesättigten Carbonsäuren, Dialkylester von ethylenisch ungesättigten C₄- bis C₁₀-Dicarbonsäuren, α-Olefine, sowie Styrol, Vinyltoluol, Vinylether, Vinylketone, Vinylhalogenide, Vinylidenhalogenide, und

b₃) 0 bis 5 Gew.-% öllöslicher Monomeren, die mehrfach ethylenisch ungesättigt sind.

2. Verfahren nach Anspruch 1, dadurch gekennzeichnet, daß als Comonomere neben dem Vinylchlorid gegebenenfalls

b₂) ethylenisch ungesättigte Ester von nicht ethylenisch ungesättigten geradkettigen, verzweigten oder cyclischen Carbonsäuren und/oder Halogenderivate des Ethylens und

b₃) Divinyl- und Diallylester von gesättigten oder ungesättigten C₄- bis C₁₀-Dicarbonsäuren, Triallylcyanurate verwendet werden.

3. Verfahren nach Anspruch 1 oder 2, dadurch gekennzeichnet, daß als Komponente b₂) die Vinylester von C₁- bis C₂₀-Alkylcarbonsäuren und/oder Di-C₁- bis -C₁₈-Alkylester von ethylenisch ungesättigten C₄- bis C₁₀-Dicarbonsäuren, Vinylhalogenide und/oder Vinylidenhalogenide verwendet werden.

4. Verfahren nach einem der vorangehenden Ansprüche, dadurch gekennzeichnet, daß die VCE-Dispersion, bezogen auf das VCE-Polymerisat, 1 bis 20 Gew.-% Schutzkolloid enthält.

5. Verwendung des gemäß einem der vorangehenden Ansprüche hergestellten Dispersionspulvers im Bausektor.

6. Verwendung des gemäß einem der vorangehenden Ansprüche hergestellten Dispersionspulvers bei der Herstellung von Beschichtungs- und Anstrichmitteln, Leimen und Klebstoffen.

## Claims

1. Process for the preparation of a pourable, readily redispersible dispersion powder comprising a vinyl chloride/ethylene copolymer which has been prepared by polymerisation of vinyl chloride, ethylene and additional ethylenically unsaturated monomers that can be copolymerised therewith, at ethylene pressures of at least 10 bar, in which process an aqueous dispersion of the vinyl chloride/ethylene copolymer, which additionally contains a protective colloid, if desired with the addition of from 0 to 40% by weight, based on the VCE-polymer, of one or more water-soluble substances having a $T_g \geq 60\,°C$, 0 to 1% by weight, based on the VCE-polymer, of a commercially available antifoaming agent, 0 to 30% by weight, based on the total weight of polymeric constituents, of a finely divided antiblocking agent known per se, of anticaking agents and/or of further additives is spray-dried or freeze-dried, characterised in that the vinyl chloride/ethylene copolymer (VCE) has been prepared in the absence of an emulsifier by radical emulsion polymerisation of

a) 1 to 50% by weight of ethylene and

b) 99 to 50% by weight of at least one ethylenically unsaturated comonomer at an ethylene pressure of from 10 to 150 bar, wherein the comonomer phase comprises

b₁) 60 to 100% by weight of vinyl chloride,

b₂) 0 to 40% by weight of monoethylenically unsaturated, oil-soluble monomers from the group of the ethylenically unsaturated allyl and vinyl esters of non-ethylenically unsaturated carboxylic acids, dialkyl esters of ethylenically unsaturated

$C_4$- to $C_{10}$-dicarboxylic acids, α-olefins, and also styrene, vinyltoluene, vinyl ethers, vinyl ketones, vinyl halides, vinylidene halides, and

$b_3$) 0 to 5% by weight of oil-soluble monomers that are ethylenically polyunsaturated.

2. Process according to Claim 1, characterised in that as comonomers there are used in addition to the vinyl chloride, optionally

$b_2$) ethylenically unsaturated esters of non-ethylenically unsaturated, straight-chain, branched or cyclic carboxylic acids, and/or halogen derivatives of ethylene and

$b_3$) divinyl and diallyl esters of saturated or unsaturated $C_4$- to $C_{10}$-dicarboxylic acids or triallyl cyanurates.

3. Process according to Claim 1 or 2, characterised in that as components $b_2$) there are used the vinyl esters of $C_1$- to $C_{20}$-alkylcarboxylic acids and/or di-$C_1$- to -$C_{18}$-alkyl esters of ethylenically unsaturated $C_4$- to $C_{10}$-dicarboxylic acids, vinyl halides and/or vinylidene halides.

4. Process according to one of the preceding claims, characterised in that the VCE-dispersion contains from 1 to 20% by weight of protective colloid, based on the VCE-polymer.

5. Use of the dispersion powder prepared according to one of the preceding claims in the construction industry.

6. Use of the dispersion powder prepared according to one of the preceding claims in the manufacture of coating and painting media, glues and adhesives.

**Revendications**

1. Procédé pour produire une poudre fluide, bien redispersable obtenue à partir d'une dispersion d'un copolymère de chlorure de vinyle et d'éthylène, qui a été produit sous une pression d'éthylène d'au moins 10 bars, par polymérisation de chlorure de vinyle et d'éthylène et d'autres monomères à insaturation éthylénique copolymérisable, procédé selon lequel on soumet une dispersion aqueuse du copolymère de chlorure de vinyle et d'éthylène, qui contient en outre un colloïde protecteur, éventuellement avec addition de 0 à 40% en poids, par rapport au polymère de chlorure de vinyle et d'éthylène, d'une ou plusieurs substances hydrosolubles ayant une température de transition vitreuse $T_v$ 60 °C, de 0 à 1% en poids, sur la base du polymère de chlorure de vinyle et d'éthylène, d'un agent anti-mousse du commerce, de 0 à 30% en poids, sur la base du poids total des constituants polymères, d'un agent anti-agglomération, en particules fines connues en soi, d'un agent anti-adhérence accidentelle et/ou d'autres additifs, à un séchage par atomisation ou par lyophilisation, procédé caractérisé en ce que le copolymère de chlorure de vinyle et d'éthylène (CVE) est produit en l'absence d'un émulsifiant par polymérisation radicalaire en émulsion de:

a) 1 à 50% en poids d'éthylène

b) 99 à 50% en poids d'au moins un commonomère à insaturation éthylénique, sous une pression d'éthylène de 10 à 150 bars, la phase des comonomères se composant de:

b1) 60 à 100% en poids de chlorure de vinyle

b2) 0 à 40% en poids de monomères à insaturation éthylénique, soluble dans les huiles, du groupe des esters allyliques et vinyliques à insaturation éthylénique d'acides carboxyliques ne comportant pas d'insaturation éthylénique, des diesters alkyliques d'acides dicarboxyliques en $C_4$ à $C_{10}$ à insaturation éthylénique, d'alpha-oléfines, ainsi que du styrène, du vinyltoluène, de l'éther-oxyde de vinyle, de la vinyl cétone, des halogénures de vinyle, des halogénures de vinylidène et:

b3) 0 à 5% en poids de monomères solubles dans les huiles, qui présentent plusieurs insaturations éthyléniques.

2. Procédé selon la revendication 1, caractérisé en ce que l'on utilise comme comonomères, en plus du chlorure de vinyle, éventuellement:

b2) Des esters à insaturation éthylénique, d'acides carboxyliques linéaires, ramifiés ou cycliques, ne comportant pas d'insaturation éthylénique, et/ou des dérivés halogénés de l'éthylène, et

b3) Des esters divinyliques et diallyliques d'acides dicarboxyliques saturés ou insaturés, en $C_4$ à $C_{10}$, des cyanurates de triallyle.

3. Procédé selon la revendication 1 ou 2, caractérisé en ce qu'on utilise comme composant b2) les esters vinyliques d'acides alkyl carboxyliques en $C_1$ à $C_{20}$ et/ou des esters dialkyliques en $C_1$ à $C_{18}$ d'acides dicarboxyliques à insaturation éthylénique en $C_4$ à $C_{10}$, des halogénures de vinyle et/ou des halogénures de vinylidène.

4. Procédé selon l'une des revendications précédentes, caractérisé en ce que la dispersion de chlorure de vinyle/éthylène contient, par rapport au polymère de chlorure de vinyle/éthylène, 1 à 20% en poids d'un colloïde protecteur.

5. Utilisation de la poudre produite à partir d'une dispersion selon l'une des revendications précédentes, dans le secteur de la construction.

6. Utilisation de la poudre produite à partir d'une dispersion selon l'une des revendications précédentes, dans la production d'enduits et de peintures, de colles et d'adhésifs.